# FASCICULE DE BREVET EUROPEEN

(11) **EP 2 585 417 B1**
(45) Date de publication et mention de la délivrance du brevet: **27.05.2015**
(21) Numéro de dépôt: 11738010.5
(22) Date de dépôt: 23.06.2011
(51) Int. Cl.: C04B 28/02, C04B 40/06, C04B 103/22, C04B 103/32, C04B 103/44

(54) **COMPOSITION HYDRAULIQUE A PRISE RETARDEE**
HYDRAULISCHE ZUSAMMENSETZUNG MIT VERZÖGERTER AUSHÄRTUNG
DELAYED-SETTING HYDRAULIC COMPOSITION

(30) Priorité: 24.06.2010 FR 1055064
(43) Date de publication de la demande: 01.05.2013
(73) Titulaire: Lafarge SA, 75116 Paris (FR)
(72) Inventeur: GUISE, Liam, F-38510 Sermerieu (FR); SABIO, Serge, F-38540 Saint Just Chaleyssin (FR); LOMBOIS-BURGER, Hélène, F-69003 Lyon (FR); FERREINT, Lilian, F-69780 Mions (FR)
(74) Mandataire: Berruet, Laure
(86) Numéro de dépôt international: PCT/FR2011/051450
(87) Numéro de publication internationale: WO 2011/161382

(56) Documents cités:
- EP-A1- 2 075 240
- EP-A2- 0 508 158
- FR-A1- 2 893 938
- US-A1- 2009 044 726
- US-B1- 6 299 679

## Description

L'invention se rapporte à une composition hydraulique comprenant un liant hydraulique et un mélange retardateur.

Par mélange retardateur pour composition hydraulique, on entend un mélange comprenant un agent retardateur qui entraîne un retard de la prise de la composition hydraulique, notamment un béton. Le début de la transition de la composition hydraulique de l'état plastique à l'état rigide est alors retardé.

De façon générale, le retard de prise d'une composition hydraulique dépend de la quantité d'agent retardateur de prise ajoutée lors de la fabrication de la composition hydraulique. De ce fait, la quantité d'agent retardateur de prise ajoutée est déterminée en fonction de l'instant souhaité auquel la composition hydraulique va être utilisé et cette quantité varie donc d'une application à l'autre.

Il serait toutefois souhaitable de disposer d'une composition hydraulique, notamment un béton, dont la prise serait retardée de plus d'une douzaine d'heures, voire de plusieurs jours quelle que soit l'application prévue. Pendant cette durée, lorsque la composition hydraulique doit être utilisée, la prise de la composition hydraulique pourrait être déclenchée à n'importe quel moment, par exemple par l'utilisation d'un agent accélérateur. La composition hydraulique pourrait ainsi avantageusement être stockée pendant plus d'une douzaine d'heures, voire pendant plusieurs jours après sa fabrication et n'être utilisée qu'au moment voulu.

Toutefois, une composition hydraulique, notamment un béton, commence à perdre sa rhéologie puis à se gélifier avant le début de prise, de sorte que la durée pendant laquelle la composition hydraulique peut être utilisé, ou fenêtre d'ouvrabilité, est toujours inférieure à la durée séparant la fabrication de la composition hydraulique du début de prise. L'ouvrabilité d'une composition hydraulique est généralement déterminée par une mesure d'affaissement ou d'étalement de la composition hydraulique. La fenêtre d'ouvrabilité correspond alors à la durée pendant laquelle l'affaissement ou l'étalement de la composition hydraulique reste supérieur à un seuil, déterminé notamment en fonction du type de la composition hydraulique et de l'application prévue.

Aussi le problème que se propose de résoudre l'invention est de fournir une composition hydraulique, comprenant un liant hydraulique, retardée de plus d'une douzaine d'heures, voire de plusieurs jours, dont la fenêtre d'ouvrabilité est de plus d'une douzaine d'heures, voire de plusieurs jours sans action de déclenchement.

Dans ce but, la présente invention se rapporte à une composition hydraulique comprenant :
- de 220 à 500 kg, par mètre cube de la composition hydraulique à l'état frais, d'un liant hydraulique comprenant du ciment Portland ;
- de 400 à 1200 kg, par mètre cube de la composition hydraulique à l'état frais, d'un sable ayant un D10 supérieur à 0,1 mm et un D90 inférieur à 4 mm. ;
- de 0,1 à 5 % en masse d'extrait sec par rapport à la masse du liant hydraulique d'un agent retardateur comprenant un acide carboxylique, un acide phosphonique ou leurs sels ;
- de 0,05 à 5 % en masse d'extrait sec par rapport à la masse du liant hydraulique d'un superplastifiant comprenant un polymère polyphosphate de polyoxyde d'alkylène, un polymère polyphosphonate de polyoxyde d'alkylène, un polymère polysulfonate de polyoxyde d'alkylène ou un polymère polycarboxylate de polyoxyde d'alkylène ;
- de 0,01 à 2 % en masse d'extrait sec par rapport à la masse du liant hydraulique d'un agent modificateur de rhéologie comprenant une cellulose ou un dérivé de cellulose, d'où il résulte que le temps de prise de la composition hydraulique est supérieur ou égal à 12 heures en l'absence de déclenchement de la prise de la composition hydraulique et la variation de l'affaissement de la composition hydraulique mesuré selon la norme EN 12350-2 étant inférieure à 50 mm ou la variation de l'étalement de la composition hydraulique mesuré avec un cône selon la norme EN 12350-2 est inférieure à 100 mm pendant au moins 12 heures, de préférence pendant au moins 1 jour, plus préférentiellement pendant au moins 2 jours, encore plus préférentiellement au moins 3 jours, en l'absence de déclenchement de la prise de la composition hydraulique.

L'étalement est mesuré pour les bétons fluides et l'affaissement est mesuré pour les autres bétons. Lorsque l'affaissement de la composition hydraulique est trop important pour pouvoir réaliser une mesure selon la norme EN 12350-2, c'est l'étalement de la composition hydraulique qui est mesuré en utilisant le même cône que celui qui est utilisé de façon classique pour mesurer l'affaissement selon la norme EN 12350-2.

L'invention offre au moins l'un des avantages décrits ci-après.

Avantageusement, la durée du retard de prise de la composition hydraulique peut être adaptée de façon simple selon les besoins.

L'invention offre comme autre avantage que les variations de la rhéologie de la composition hydraulique sont réduites pendant la fenêtre d'ouvrabilité de la composition hydraulique,.

L'invention offre comme autre avantage que le début de la prise intervient rapidement, en particulier moins de 36 heures, après la fin de la fenêtre d'ouvrabilité de la composition hydraulique.

L'invention offre comme autre avantage qu'après le début de la prise, la résistance à la compression de la composition hydraulique croît rapidement.

L'invention offre comme autre avantage que le déclenchement de la composition hydraulique retardée peut être initié par une action volontaire de l'utilisateur à n'importe quel moment pendant plusieurs jours.

L'invention offre comme autre avantage que tout phénomène de ségrégation de la composition hydraulique est évité sur la fenêtre d'ouvrabilité de la composition hydraulique. La composition hydraulique à l'état frais peut alors avantageusement être transportée et/ou stockée sans agitation de la composition hydraulique.

Enfin l'invention a pour avantage de pouvoir être mise en oeuvre dans l'une des industries telles que l'industrie du bâtiment, l'industrie chimique (adjuvantiers) et l'industrie cimentière.

D'autres avantages et caractéristiques de l'invention apparaîtront clairement à la lecture de la description et des exemples donnés à titre purement illustratifs et non limitatifs qui vont suivre.

Par l'expression « liant hydraulique », on entend selon la présente invention un matériau pulvérulent qui, gâché avec de l'eau, forme une pâte qui fait prise et durcit par suite de réactions, et qui après durcissement, conserve sa résistance et sa stabilité même sous l'eau. Le liant hydraulique peut être un ciment selon la norme EN 197-1.

Par l'expression « composition hydraulique », on entend selon la présente invention un mélange d'un liant hydraulique, avec de l'eau de gâchage, des granulats, éventuellement des adjuvants, et éventuellement des additions minérales. Une composition hydraulique peut par exemple être un béton, notamment un béton hautes performances, un béton très hautes performances, un béton auto-plaçant, un béton auto-nivelant, un béton auto-compactant, un béton fibré, un béton prêt à l'emploi, un béton léger, un béton préfabriqué ou un béton coloré. Par le terme « béton », on entend par exemple les bétons ayant subi une opération de finition telle que le béton bouchardé, le béton désactivé ou lavé, ou le béton poli. Cette définition comprend également le béton précontraint. Le terme « béton » comprend les mortiers ; dans ce cas précis le béton comprend un mélange d'un liant hydraulique, de sable, d'eau, éventuellement d'adjuvants et éventuellement d'additions minérales. Le terme « béton » selon la présente invention désigne indistinctement le béton frais ou le béton durci. La composition hydraulique selon la présente invention peut être utilisée directement sur chantier à l'état frais et coulée dans un coffrage adapté à l'application considérée, ou elle peut être utilisée en préfabrication, ou en tant qu'enduit de jointement sur un support solide.

Par le terme « granulats » on entend selon la présente invention des graviers, des gravillons et/ou du sable.

Par l'expression « additions minérales » on entend selon la présente invention un matériau minéral finement divisé utilisé dans le béton afin d'améliorer certaines propriétés ou pour lui apporter des propriétés particulières. Il s'agit, par exemple, de cendres volantes (telles que définies dans la norme EN 450), de fumées de silice (telles que définies dans la norme prEN 13263 :1998 ou NF P 18-502), de laitiers (tels que définis dans la norme NF P 18-506), d'additions calcaires (telles que définies dans la norme NF P 18-508) et les additions siliceuses (telles que définies dans la norme NF P 18-509).

Par l'expression « ciment Portland », on entend selon la présente invention un ciment de type CEM I, CEM II, CEM III, CEM IV ou CEM V selon la norme « Ciment » NF EN 197-1.

Par le terme « argiles », on entend selon la présente invention des silicates d'aluminium et/ou de magnésium, notamment les phyllosilicates à structure en feuillets, typiquement espacés d'environ 7 à environ 14 Angströms. Des argiles rencontrées fréquemment dans les sables peuvent être notamment la montmorillonite, l'illite, la kaolinite, la muscovite et les chlorites. Les argiles peuvent être de type 2 : 1 mais aussi de type 1 : 1 (kaolinite) ou 2 : 1 : 1 (chlorites).

Par l'expression « plastifiant/réducteur d'eau », on entend selon la présente invention un adjuvant qui, sans modifier la consistance, permet de réduire la teneur en eau d'un béton donné, ou qui, sans modifier la teneur en eau, augmente l'affaissement/l'étalement du béton, ou produit les deux effets en même temps. La norme EN 934-2 prévoit que la réduction d'eau doit être supérieure à 5 %. Les réducteurs d'eau peuvent, par exemple, être à base d'acides lignosulfoniques, d'acides carboxyliques ou d'hydrates de carbone traités.

Par l'expression « superplastifiant » ou « superfluidifiant » ou « super réducteur d'eau », on entend selon la présente invention un plastifiant/réducteur d'eau qui permet de réduire de plus de 12 % la quantité d'eau nécessaire à la réalisation d'un béton. Un superplastifiant présente une action fluidifiante puisque, pour une même quantité d'eau, l'ouvrabilité du béton est augmentée lorsque le superplastifiant est présent.

Par le terme « prise », on entend selon la présente invention le passage à l'état solide par réaction chimique d'hydratation d'un liant hydraulique. La prise est généralement suivie par la période de durcissement.

Par le terme « durcissement », on entend selon la présente invention l'augmentation des résistances mécaniques d'un liant hydraulique, après la fin de la prise.

Dans la suite de la description, les termes agents retardateur, superplastifiant et agent modificateur de rhéologie sont utilisés pour caractériser des fonctions de composés chimiques. Il est clair qu'un même composé chimique peut comprendre plusieurs fonctions différentes. Par exemple, un composé chimique peut à la fois remplir le rôle d'agent retardateur et de superplastifiant. Par exemple, un composé chimique peut à la fois remplir le rôle d'agent retardateur et d'agent modificateur de rhéologie.

### Agent retardateur

L'agent retardateur correspond à la définition du retardateur de prise mentionné dans la norme NF EN 934-2.

Selon un exemple de réalisation de l'invention, l'agent retardateur comprend un composé choisi parmi :
- les acides carboxyliques ou leurs sels, notamment l'acide gluconique, le gluconate, l'acide tartrique, l'acide citrique, l'acide gallique, l'acide glucoheptonique, l'acide saccharique et l'acide salicylique ;
- les acides phosphoniques et leurs sels, notamment l'acide aminotri(méthylènephosphonique), le sel pentasodique de l'acide aminotri(méthylènephosphonique), l'acide hexaméthylène-diamine-tétra(méthylène-phosphonique), l'acide diéthylène-triamine-penta(méthylène-phosphonique et son sel de sodium) ; et
- les mélanges de ces composés.

Les sels associés comprennent par exemple le sel d'ammonium, le sel de métal alcalin (par exemple le sel de sodium, le sel de potassium, etc.), le sel de métal alcalino-terreux (par exemple le sel de calcium, le sel de magnésium, etc.). Cependant d'autres sels peuvent être également utilisés.

De préférence, l'agent retardateur comprend un acide hydroxycarboxylique ou un sel d'acide hydroxycarboxylique. Selon un exemple de réalisation de l'invention, l'agent retardateur comprend un gluconate.

### Superplastifiant

Selon un exemple de réalisation de l'invention, le superplastifiant comprend un polymère comprenant une chaîne principale et plus de trois chaînes pendantes reliées à la chaîne principale.

Le superplastifiant comprend un polymère polyphosphate de polyoxyde d'alkylène, un polymère polyphosphonate de polyoxyde d'alkylène, un polymère polysulfonate de polyoxyde d'alkylène ou un polymère polycarboxylate de polyoxyde d'alkylène (également appelés polycarboxylate polyox ou PCP). De préférence, le superplastifiant comprend un polymère polycarboxylate de polyoxyde d'alkylène

Un exemple de superplastifiant correspond à un copolymère comprenant au moins une unité de formule (I) 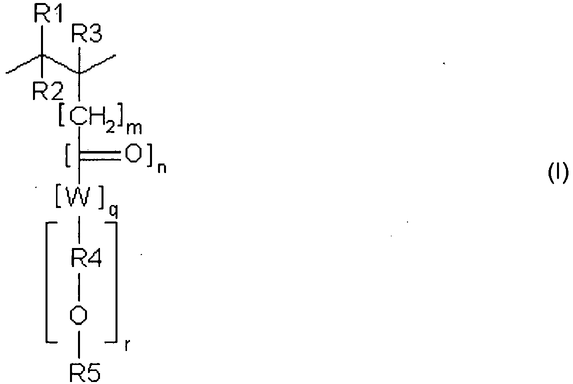 et au moins une unité de formule (II) 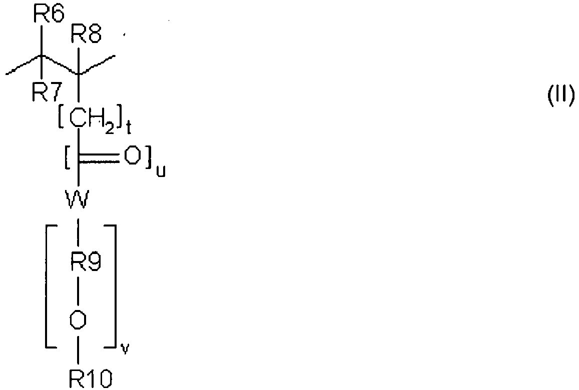 où R1, R2, R3, R6, R7 et R8 sont indépendamment un atome d'hydrogène, un radical alkyle linéaire ou ramifié en C₁ à C₂₀, ou un radical aromatique, ou un radical -COOR11 avec R11 représentant indépendamment un atome d'hydrogène, un radical alkyle linéaire ou ramifié en C₁ à C₄, un cation monovalent, divalent ou trivalent ou un groupe ammonium ;
R10 est un atome d'hydrogène, un radical alkyle linéaire ou ramifié en C₁ à C₂₀, ou un radical aromatique ;
R4 et R9 sont indépendamment un radical alkyle linéaire ou ramifié en C₂ à C₂₀ ;
R5 est un atome d'hydrogène, un groupe alkyle en C₁ à C₂₀ ou un groupe anionique ou cationique, par exemple un groupe phosphonate, un groupe sulfonate, un groupe carboxylate, etc. ;
W est un atome d'oxygène ou d'azote ou un radical NH ;
m et t sont indépendamment des nombres entiers compris de 0 à 2 ;
n et u sont indépendamment des nombres entiers égaux à 0 ou 1 ;
q est un nombre entier égal à 0 ou 1 ;
r et v sont indépendamment des nombres entiers compris de 0 à 500 ;
et la masse molaire dudit copolymère est comprise de 10 000 à 400 000 daltons.

De préférence, le radical R1 ou R6 est un atome d'hydrogène. De préférence, le radical R2 ou R7 est un atome d'hydrogène. De préférence, le radical R3 ou R8 est un radical méthyle ou hydrogène. De préférence, le radical R4 ou R9 est un radical éthyle.

De préférence, le copolymère utilisé selon l'invention ou un de ses sels possède un nombre entier r de 1 à 300, de préférence de 20 à 250, plus préférentiellement de 40 à 200, encore plus préférentiellement de 40 à 150.

Le superplastifiant peut correspondre à un sel du copolymère défini précédemment.

Le copolymère peut comprendre plusieurs unités différentes selon la formule (I) ayant, notamment, des radicaux R5 différents.

Le superplastifiant peut être un superplastifiant à efficacité immédiate dont l'action fluidifiante maximale est obtenue dans les quinze premières minutes à 20°C après l'ajout d'eau au liant hydraulique pour des dosages conventionnels. Le superplastifiant peut être un superplastifiant à efficacité différée dont l'action fluidifiante maximale est obtenue après quinze premières minutes à 20°C après l'ajout d'eau au liant hydraulique pour des dosages conventionnels. La mesure de l'action fluidifiante du superplastifiant à efficacité immédiate et du superplastifiant à efficacité différée est mesurée par une mesure d'étalement et/ou d'affaissement.

L'augmentation de l'action fluidifiante du superplastifiant à efficacité différée peut être obtenue par une augmentation de la capacité du superplastifiant à efficacité différée à s'adsorber sur les composants minéraux (notamment les grains de ciments) de la composition hydraulique. Dans ce but, une possibilité consiste à augmenter la densité de charges anioniques du superplastifiant. Une augmentation de la densité de charges du superplastifiant peut être obtenue par deux phénomènes différents qui peuvent se produire simultanément :
- l'augmentation du nombre de charges portées par le polymère ; et
- la réduction du poids moléculaire du polymère.

La réduction du poids moléculaire du superplastifiant peut être obtenue en choisissant un superplastifiant comprenant une chaîne principale et des chaînes pendantes reliées à la chaîne principale et qui peuvent se séparer de la chaîne principale lorsque le superplastifiant est dans la composition hydraulique.

La séparation de chaînes pendantes et/ou l'augmentation du nombre de charges portées par le superplastifiant peut être obtenue en choisissant un superplastifiant comprenant des fonctions chimiques hydrolysables qui, sous l'effet des ions hydroxyde (OH⁻) dans la composition hydraulique, peuvent se transformer pour fournir des fonctions carboxylate (COO⁻). Les fonctions chimiques hydrolysables sont en particulier les anhydrides, les esters et les amides. Un polymère hydrolysable est un polymère comprenant des fonctions chimiques hydrolysables dans les conditions de basicité et dans la fenêtre d'ouvrabilité de la composition hydraulique et un monomère hydrolysable est un monomère comprenant une fonction hydrolysable dans les conditions de basicité et dans la fenêtre d'ouvrabilité de la composition hydraulique.

Un exemple de superplastifiant est celui décrit dans les documents EP-A-537872, US20030127026 et US20040149174.

Un exemple de superplastifiant est obtenu par polymérisation :
- d'un monomère ionique du type phosphonique, sulfonique ou carboxylique, de préférence carboxylique et avantageusement de type (méth)acrylique ; et
- d'un monomère de type (méth)acrylate de polyoxyalkylène glycol (de C₁ à C₄), par exemple de type (méth)acrylate de polyéthylène glycol (PEG), dont le poids moléculaire est par exemple de 100 à 10000, de préférence de 500 à 5000 et avantageusement de 750 à 2500.

Le ratio molaire entre l'unité selon la formule (I) et l'unité selon la formule (II) peut varier, par exemple de 90/10 à 45/55, de préférence de 80/20 à 55/45.

Il est possible d'utiliser un ou plusieurs autres monomère(s), par exemple ceux choisis parmi le :
(a) type acrylamide, par exemple N,N-diméthylacrylamide, 2,2'-diméthylamino (méth)acrylate ou ses sels, 2,2'-diméthylaminoalkyle (méth)acrylate ou ses sels avec le groupe alkyl et en particulier éthyle, et propyle, et de façon générale tout monomère comprenant une fonction de type amine ou amide ;
(b) type hydrophobe, par exemple (méth)acrylate d'alkyle comprenant de 1 à 18 atomes de carbone, en particulier méthyle ou éthyle.

La quantité de cet autre monomère peut être de 5 à 25 % mol du total des monomères.

Dans le cas où le superplastifiant est un superplastifiant à action différée, l'anionicité du superplastifiant peut augmenter dans le béton dans la fenêtre d'ouvrabilité.

Le superplastifiant peut comprendre un polymère hydrolysable dans le béton. Lors de la fabrication du béton, le pH étant basique, des réactions d'hydrolyse se produisent qui conduisent à une modification de la structure du polymère hydrolysable et à une modification des propriétés du polymère hydrolysable, à savoir une augmentation de l'action fluidifiante du polymère hydrolysable. Selon un exemple de réalisation de l'invention, le polymère hydrolysable est un PCP.

Des exemples de superplastifiants à efficacité différée sont décrits dans les documents EP 1 136 508, WO 2007/047407, US 2009/0312460 et PCT/US2006/039991.

La forme du superplastifiant peut varier d'une forme liquide à une forme solide, en passant par une forme cireuse.

### Agent modificateur de rhéologie ou AMR

L'agent modificateur de rhéologie est hydrosoluble.

L'agent modificateur de rhéologie comprend une cellulose ou un dérivé de cellulose. Selon un exemple de réalisation de l'invention, l'agent modificateur de rhéologie comprend un éther de cellulose. Selon une variante de l'invention, un éther de cellulose utilisé selon l'invention est la methylhydroxypropylcellulose. Selon une autre variante de l'invention, un éther de cellulose utilisé selon l'invention est la méthylcellulose.

Dans la suite de la description, le mélange comprenant l'agent retardateur, le superplastifiant et l'agent modificateur de rhéologie est appelé mélange retardateur.

### Composition hydraulique

Le liant hydraulique comprend un ciment Portland. Des ciments qui conviennent sont les ciments Portland décrits dans l'ouvrage "Lea's Chemistry of Cement and Concrete ». Les ciments Portland incluent les ciments de laitier, de pouzzolane, de cendres volantes, de schistes brûlés, de calcaire et les ciments composites. Il s'agit par exemple d'un ciment de type CEM I, CEM II, CEM III, CEM IV ou CEM V selon la norme « Ciment » NF EN 197-1. De préférence, le ciment est du type CEM I ou CEM II.

La composition hydraulique comprend de 220 à 500 kg, de préférence de 250 à 450 kg du liant hydraulique par mètre cube de la composition hydraulique à l'état frais.

La composition hydraulique comprend de 220 à 500 kg, de préférence de 250 à 450 kg de ciment Portland par mètre cube de la composition hydraulique à l'état frais.

La composition hydraulique comprend de 400 à 1800 kg, de préférence de 500 à 1600 kg, plus préférentiellement de 600 à 1100 kg du sable par mètre cube de la composition hydraulique à l'état frais.

Le sable a un D10 supérieur à 0,1 mm et un D90 inférieur à 4 mm. Le sable peut être de toute nature minérale, calcaire, siliceuse ou silico-calcaire ou autre. Le sable-peut correspondre à un mélange de sables de natures différentes. Le D90, également noté Dᵥ90, correspond au 90^{ème} centile de la distribution en volume de taille des grains. Autrement dit, 90 % des grains ont une taille inférieure au D90 et 10 % ont une taille supérieure au D90. Le D10, également noté Dᵥ10, correspond au 10^{ème} centile de la distribution en volume de taille des grains. Autrement dit, 10 % des grains ont une taille inférieure au D10 et 90 % ont une taille supérieure au D10.

La composition peut, en outre, comprendre d'autres granulats, par exemple des gravillons qui correspondent, par exemple, à des granulats ayant une granulométrie comprise de 4 à 20 mm ou des graviers qui correspondent, par exemple, à des granulats ayant une granulométrie strictement supérieure à 20 mm.

La composition hydraulique peut en outre comprendre de 5 % à 40 %, de préférence de 10 % à 30 %, plus préférentiellement de 15 % à 25 %, en masse par rapport à la masse du liant hydraulique d'un matériau particulaire (également appelé addition inorganique) ou d'un mélange de matériaux particulaires. Le matériau particulaire a par exemple une taille moyenne de particules inférieure à 100 µm. Le matériau particulaire peut comprendre des matériaux pouzzolaniques ou non pouzzolaniques ou un mélange de ceux-ci.

Le terme « particule » tel qu'utilisé dans le cadre de la présente invention doit être compris dans un sens large et correspond non seulement des particules compactes ayant plus ou moins une forme sphérique mais aussi à des particules anguleuses, des particules aplaties, des particules en forme de flocon, des particules en forme de fibres, ou des particules fibreuses, etc. On comprendra que la « taille » des particules dans le cadre de la présente invention signifie la plus petite dimension transversale des particules. A titre d'exemple, dans le cas de particules en forme de fibres, la taille des particules correspond au diamètre des fibres. On entend par particules d'un matériau les particules prises individuellement (c'est-à-dire les éléments unitaires du matériau) sachant que le matériau peut se présenter sous la forme d'agglomérats de particules. Par le terme « taille moyenne », on entend selon la présente invention la taille de la particule qui est supérieure à la taille de 50 % en volume des particules et inférieure à la taille de 50 % en volume des particules d'une distribution de particules.

Un exemple de matériau particulaire correspond au laitier, notamment au laitier granulé de haut fourneau.

Des matériaux pouzzolaniques adaptés comprennent les fumées de silice, également connues sous le nom de micro-silice, qui sont par exemple un sous-produit de la production de silicium ou d'alliages de ferrosilicium. Il est connu comme un matériau pouzzolanique réactif: Son principal constituant est le dioxyde de silicium amorphe. Les particules individuelles ont généralement un diamètre d'environ 5 à 10 nm. Les particules individuelles peuvent s'agglomérer pour former des agrégats de 0,1 à 1 µm. Les agrégats de 0,1 à 1 µm peuvent s'agglomérer pour former des agrégats de 20 à 30 µm. Les fumées de silice ont généralement une surface spécifique BET de 10 - 30 m²/g. Les surfaces spécifiques BET peuvent être mesurées en utilisant un analyseur SA 3100 de Beckman Coulter avec l'azote comme gaz adsorbé.

D'autres matériaux pouzzolaniques comprennent les cendres volantes qui ont généralement un D10 supérieur à 10 µm et un D90 inférieur à 120 µm et ont, par exemple, un D50 de 30 à 50 µm. Le D90, également noté Dᵥ90, correspond au 90^{ème} centile de la distribution en volume de taille des grains. Autrement dit, 90 % des grains ont une taille inférieure au D90 et 10 % ont une taille supérieure au D90. Le D50, également noté Dᵥ50, correspond au 50^{ème} centile de la distribution en volume de taille des grains. Autrement dit, 50 % des grains ont une taille inférieure au D50 et 50 % ont une taille supérieure au D50. Le D10, également noté Dᵥ10, correspond au 10^{ème} centile de la distribution en volume de taille des grains. Autrement dit, 10 % des grains ont une taille inférieure au D10 et 90 % ont une taille supérieure au D10.

Les tailles moyennes et les distributions de particules peuvent être déterminées par granulométrie laser (notamment en utilisant un granulomètre laser Malvern MS2000) pour les particules de taille inférieure à 63 µm, ou par tamisage pour les particules de taille supérieure à 63 µm. Néanmoins, lorsque les particules individuelles ont une tendance à l'agrégation, il est préférable de déterminer leur taille par microscopie électronique, étant donné que la taille apparente mesurée par granulométrie par diffraction laser est alors plus importante que la taille particulaire réelle, ce qui est susceptible de fausser l'interprétation (agglomération et floculation).

La surface spécifique Blaine peut être déterminée comme cela est décrit dans la norme EN 196-6 paragraphe 4.

D'autres matériaux pouzzolaniques comprennent des matériaux riches en aluminosilicate tels que le métakaolin et les pouzzolanes naturelles ayant des origines volcaniques, sédimentaires, ou diagéniques.

Des matériaux non-pouzzolaniques adaptés comprennent des matériaux contenant du carbonate de calcium (par exemple du carbonate de calcium broyé ou précipité), de préférence un carbonate de calcium broyé. Le carbonate de calcium broyé peut, par exemple, être le Durcal^{®} 1 (OMYA, France). Les matériaux non-pouzzolaniques ont de préférence une taille moyenne de particules inférieure à 5 µm, par exemple de 1 à 4 µm. Les matériaux non-pouzzolaniques peuvent être un quartz broyé, par exemple le C800 qui est un matériau de remplissage de silice sensiblement non-pouzzolanique fourni par Sifraco, France. La surface spécifique BET préférée (déterminée par des méthodes connues décrites précédemment) du carbonate de calcium ou du quartz broyé est de 2 - 10 m²/g, généralement moins de 8 m²/g, par exemple de 4 à 7 m²/g, de préférence moins d'environ 6 m²/g. Le carbonate de calcium précipité convient également comme matériau non-pouzzolanique. Les particules individuelles ont généralement une taille (primaire) de l'ordre de 20 nm. Les particules individuelles s'agglomèrent en agrégats ayant une taille (secondaire) de 0,1 à 1 µm. Les agrégats ayant une taille (secondaire) de 0,1 à 1 µm peuvent eux-mêmes former des agrégats ayant une taille (ternaire) supérieure à 1 µm.

Un matériau non-pouzzolanique unique ou un mélange de matériaux non-pouzzolaniques peut être utilisé, par exemple du carbonate de calcium broyé, du quartz broyé ou du carbonate de calcium précipité ou un mélange de ceux-ci. Un mélange de matériaux pouzzolaniques ou un mélange de matériaux pouzzolaniques et non-pouzzolaniques peuvent également être utilisés. Selon un exemple de réalisation, la durée entre la fin de la fenêtre d'ouvrabilité et le début de la prise de la composition hydraulique est inférieure à 36 heures, de préférence inférieure à 24 heures, plus préférentiellement inférieure à 16 heures.

Selon un exemple de réalisation de l'invention, la résistance à la compression de la composition hydraulique est au moins égale à 1 MPa 24 heures après le début de la prise de la composition hydraulique.

Par l'expression « fenêtre d'ouvrabilité » d'une composition hydraulique on entend selon la présente invention la durée pendant laquelle l'affaissement de la composition hydraulique, mesuré selon la norme EN 12350-2, reste supérieure ou égale à 10 mm.

Selon un exemple de réalisation de l'invention, la quantité de l'agent retardateur dans la composition hydraulique est de 0,1 à 5 % en masse d'extrait sec de l'agent retardateur par rapport à la masse du liant hydraulique sec, de préférence de 0,1 à 1,0 % en masse d'extrait sec de l'agent retardateur par rapport à la masse du liant hydraulique sec.

Selon un exemple de réalisation de l'invention, la quantité du superplastifiant dans la composition hydraulique est de 0,05 à 5 % en masse d'extrait sec du superplastifiant par rapport à la masse du liant hydraulique sec, de préférence de 0,05 à 1 % en masse d'extrait sec du superplastifiant par rapport à la masse du liant hydraulique sec, plus préférentiellement de 0,05 à 0,75 % en masse d'extrait sec du superplastifiant par rapport à la masse du liant hydraulique sec, encore plus préférentiellement de 0,05 à 0, 5 % en masse d'extrait sec du superplastifiant par rapport à la masse du liant hydraulique sec.

Selon un exemple de réalisation de l'invention, la quantité de l'agent modificateur de rhéologie dans la composition hydraulique est de 0,01 à 2 % en masse d'extrait sec de l'agent modificateur de rhéologie par rapport à la masse du liant hydraulique sec, de préférence de 0,01 à 0,5 % en masse d'extrait sec de l'agent modificateur de rhéologie par rapport à la masse du liant hydraulique sec, plus préférentiellement de 0,025 à 0,4 % en masse d'extrait sec de l'agent modificateur de rhéologie par rapport à la masse du liant hydraulique sec.

Le liant hydraulique peut comprendre du ciment Portland, selon la norme EN 197-1.

La quantité finale du mélange retardateur dépend des propriétés considérées (par exemple temps ouvert recherché, formule de béton, etc).

La composition hydraulique est obtenue en mélangeant des granulats, le liant hydraulique, les adjuvants et de l'eau.

De façon générale, le rapport en masse d'eau efficace / liant sec (rapport E/C) peut être compris en général de 0,45 à 0,65.

La composition hydraulique peut, en plus du mélange retardateur, comprendre d'autres types d'adjuvants couramment utilisés dans les bétons.

Des exemples d'adjuvants pouvant être utilisés sont des : agents anti-mousse, inhibiteurs de corrosion, agents de réduction du retrait, fibres, pigments, agents d'aide à la pompabilité, agents réducteurs d'alcalis réactions, agents de renforcement, composés hydrofugeants et leurs mélanges.

Selon un exemple de réalisation de l'invention, la composition hydraulique comprend en outre un agent inertant d'argile, c'est-à-dire un adjuvant permettant la neutralisation au moins partielle des effets nuisibles dus à la présence de l'argile dans une composition hydraulique, notamment une composition hydraulique comprenant un superplastifiant.

### Procédé de fabrication

Selon un exemple de réalisation de l'invention, certains des adjuvants du mélange retardateur peuvent être introduits sous forme de poudre directement dans les divers constituants de la composition hydraulique quels que soient leurs états physiques (sous forme liquide ou solide).

Selon un exemple de réalisation de l'invention, certains des adjuvants du mélange retardateur peuvent aussi être introduits sous forme de solution liquide ou semi-liquide dans l'eau de gâchage.

L'agent retardateur, le superplastifiant et l'agent modificateur de rhéologie peuvent être ajoutés séparément lors de la fabrication de la composition hydraulique. Un mélange de l'agent retardateur, du superplastifiant et de l'agent modificateur de rhéologie peut néanmoins être réalisé au préalable, le mélange étant alors directement ajouté à la composition hydraulique.

De façon avantageuse, la variation de l'affaissement de la composition hydraulique, mesuré selon la norme EN 12350-2, est inférieure à 50 mm ou la variation de l'étalement de la composition hydraulique, mesuré avec un cône selon la norme EN 12350-2, est inférieure à 100 mm pendant au moins 12 heures, de préférence pendant au moins 1 jour, plus préférentiellement pendant au moins 2 jours, encore plus préférentiellement au moins 3 jours, sans déclenchement de la prise de la composition hydraulique. De préférence, la consistance de la composition hydraulique est maintenue dans la même classe de consistance par rapport à l'affaissement, telle que définie par la norme EN 206-1, pendant au moins 12 heures, de préférence pendant au moins 1 jour, plus préférentiellement pendant au moins 2 jours, encore plus préférentiellement au moins 3 jours, sans déclenchement de la prise de la composition hydraulique. Ceci signifie que, si juste après la fabrication de la composition hydraulique, la classe de consistance de la composition hydraulique est par exemple S4, alors la classe de consistance de la composition hydraulique reste la classe S4 pendant au moins 12 heures, de préférence pendant au moins 1 jour, plus préférentiellement pendant au moins 2 jours, encore plus préférentiellement au moins 3 jours, sans déclenchement de la prise de la composition hydraulique.

Le procédé peut comprendre, en outre, l'étape de transport et/ou de stockage de la composition hydraulique à l'état frais sans agitation de la composition hydraulique. L'agent modificateur de rhéologie permet de façon avantageuse de maintenir l'homogénéité de la composition hydraulique même sans agitation. De façon avantageuse, la composition hydraulique retardée selon l'invention une fois fabriquée n'a alors pas besoin d'être agitée jusqu'à son utilisation, c'est-à-dire jusqu'au déclenchement de la prise de la composition hydraulique, qui peut intervenir de façon naturelle ou être provoqué. La composition hydraulique peut donc être transportée et/ou stockée dans des sacs, des fûts, ou n'importe quel type de containeur sans agitation de la composition hydraulique. De préférence, la composition hydraulique retardée selon l'invention est stockée en emballage fermé, par exemple dans un container hermétiquement fermé. A titre d'exemple, la composition hydraulique peut être transportée dans des sacs de la taille de l'ordre du mètre cube. Selon un exemple de réalisation, la composition hydraulique retardée à l'état frais peut être transportée et/ou stockée sans agitation de la composition hydraulique pendant au moins 12 heures, de préférence pendant au moins 1 jour, plus préférentiellement pendant au moins 2 jours, encore plus préférentiellement au moins 3 jours. La composition hydraulique peut être stockée en extérieur à des températures variant de 5°C à 30°C. Même à des températures inférieures à 10°C, la variation de l'affaissement de la composition hydraulique mesuré selon la norme EN 12350-2 est inférieure à 50 mm ou la variation de l'étalement de la composition hydraulique mesuré avec un cône selon la norme EN 12350-2 est inférieure à 100 mm pendant au moins 12 heures, de préférence pendant au moins 1 jour, plus préférentiellement pendant au moins 2 jours, encore plus préférentiellement au moins 3 jours, sans déclenchement de la prise de la composition hydraulique.

Le fait que la composition hydraulique comprend, en outre, un agent modificateur de rhéologie permet d'éviter tout phénomène de ressuage (remontée d'eau en surface du béton), de sédimentation (plus forte concentration de granulats à la base du béton) ou de consolidation (absence de pâte au niveau des contacts intergranulaires). Ces phénomènes peuvent dégrader l'aspect visuel du béton et/ou gêner voire empêcher en pratique toute remanipulation du béton (notamment son remélange et son utilisation), bien que la composition hydraulique ne soit pas agitée pendant son transport et/ou son stockage.

Le procédé peut comprendre, en outre, le transport et/ou le stockage de la composition hydraulique à l'état frais, de préférence tout en agitant la composition hydraulique, par exemple dans un camion toupie.

Le déclenchement de la prise de la composition hydraulique peut être réalisé par n'importe quel moyen. La prise peut être obtenue sans action particulière après la fin de la fenêtre d'ouvrabilité. Le déclenchement de la prise de la composition hydraulique peut être obtenu par une action physique, mécanique ou chimique, notamment par malaxage, pompage, agitation par ondes acoustiques de la composition hydraulique.

Des exemples, illustrent l'invention sans en limiter la portée.

### EXEMPLES

Dans les exemples, les produits et matériaux utilisés sont disponibles auprès des fournisseurs suivants :

| | Produit ou matériau | Fournisseur |
|---|---|---|
| (1) | Ciment Portland CEM I | Lafarge - Saint Pierre La Cour ou Le Havre |
| (2) | Matériau de remplissage BL 200™ | Omya |
| (3) | Sable 0/5 mm | Saint Bonnet, France |
| (4) | Gravillon 5/10 mm | Saint Bonnet, France |
| (5) | Adjuvant CHRYSOPlast CER™ | Chryso |
| (6) | Adjuvant GLENIUM 27™ | BASF |
| (7) | Adjuvant Rheotec Z60™ | BASF |
| (8) | Adjuvant Culminal MHPC 20000 P™ | Aqualon - Ashland |
| (9) | Adjuvant PRELOM 300™ | BASF |
| (10) | Adjuvant Tylose MHS 3000000P6 | SE Tylose |
| (11) | Cendres Volantes | Centrale thermique de Carling (France) |
| (12) | Matériau de remplissage calcaire | Lafarge - Saint Pierre La Cour |
| (13) | Ciment Portland CEM II 32,5 | Lafarge - Saint Pierre La Cour |
| (14) | Ciment Portland CEM II 42,5 | Lafarge - Saint Pierre La Cour |

Le ciment CEM I était le ciment produit par la société Lafarge provenant du site de Saint Pierre La Cour ou du site du Havre qui était du type CEM I 52,5 N selon la norme EN 197-1.

Le ciment CEM II 32,5 était le ciment produit par la société Lafarge provenant du site de Saint Pierre La Cour qui était du type CEM II 32,5 N selon la norme EN 197-1.

Le ciment CEM II 42,5 était le ciment produit par la société Lafarge provenant du site de Saint Pierre La Cour qui était du type CEM II 42,5 N selon la norme EN 197-1.

Le matériau de remplissage BL 200™ était une addition minérale calcaire. Il avait un D90 inférieur à 50 µm.

Le sable 0/5 mm et le gravillon 5/10 mm de Saint Bonnet étaient du type alluvionnaire silico-calcaire.

Le CHRYSOPlast CER™ est généralement commercialisé comme fluidifiant. Il peut toutefois également avoir une action retardatrice. Dans les présents exemples, le CHRYSOPlast CER™ était appelé agent retardateur même s'il avait également une action fluidifiante.

L'adjuvant GLENIUM 27™ était un superplastifiant de type PCP à action immédiate.

L'adjuvant Rheotec Z60™ était un superplastifiant à action différée. Le superplastifiant Rheotec Z60™ était un PCP.

L'adjuvant PRELOM 300™ était un superplastifiant à action immédiate à base d'éthers polycarboxyliques modifiés.

L'adjuvant Culminal MHPC 20000 P™ était un agent modificateur de rhéologie correspondant à un methylhydroxypropylcellulose.

L'adjuvant Tylose MHS 3000000P6 était un agent modificateur de rhéologie correspondant à un methylhydroxyéthylcellulose.

Le matériau de remplissage calcaire ou filler calcaire était produit par la société Lafarge sur le site de Saint Pierre La Cour.

Les cendres volantes provenaient de la centrale thermique de Carling (France).

### Formulation de mortier

La formulation (1) de béton utilisée pour réaliser les essais est décrite dans le tableau 1 suivant :

**Tableau 1 : Formulation (1) de mortier**

| Composant | Proportion (en g) pour 1 L de mortier frais |
|---|---|
| Ciment Lafarge Saint Pierre La Cour | 408 |
| Filler calcaire BL 200™ | 72,9 |
| Sable 0-5 de Saint Bonnet | 1502,4 |
| Eau totale | 269,02 |
| Adjuvants | Voir exemples |

### Formulations de béton

La formulation (2) de béton utilisée pour réaliser les essais est décrite dans le tableau 2 suivant :

**Tableau 2 : Formulation (2) de béton**

| Composant | Proportion (en kg) pour 1 m³ de béton frais |
|---|---|
| Ciment Lafarge Saint Pierre La Cour | 280 |
| Filler calcaire BL 200™ | 50 |
| Sable 0-5 de Saint Bonnet | 990 |
| Gravillon 5-10 de Saint Bonnet | 830 |
| Eau totale | 200 |
| Adjuvants | Voir exemples |

La formulation (3) de béton utilisée pour réaliser les essais est décrite dans le tableau 3 suivant :

**Tableau 3 : Formulation (3) de béton**

| Composant | Proportion (en kg) pour 1 m³ de béton frais |
|---|---|
| Ciment Lafarge Le Havre | 280 |
| Filler calcaire BL 200™ | 56 |
| Sable 0-5 de Saint Bonnet | 910 |
| Gravillon 5-10 de Saint Bonnet | 487 |
| Gravillon 10-20 de Saint Bonnet | 433 |
| Eau totale | 182 |
| Adjuvants | Voir exemples |

La formulation (4) de béton utilisée pour réaliser les essais est décrite dans le tableau 4 suivant :

**Tableau 4 : Formulation (4) de béton**

| Composant | Proportion (en kg) pour 1 m³ de béton frais |
|---|---|
| Ciment Lafarge Le Havre | 294 |
| Filler calcaire BL 200™ | 56 |
| Sable 0-5 de Saint Bonnet | 977 |
| Gravillon 5-10 de Saint Bonnet | 820 |
| Eau totale | 180 |
| Adjuvants | Voir exemples |

### Méthode de préparation d'un mortier selon la formulation (1)

- Mettre les sables dans le bol d'un malaxeur Perrier ;
- A T = 0 : débuter le malaxage à petite vitesse (140 tours/min) et ajouter simultanément l'eau de mouillage en 30 secondes, puis continuer à malaxer à petite vitesse (140 tours/min) jusqu'à 60 secondes ;
- A T = 60 secondes : arrêter le malaxage et laisser reposer pendant 4 minutes ;
- A T = 5 minutes (T0 pour le test de maintien de rhéologie) : ajouter le ciment, l'addition minérale et l'agent modificateur de rhéologie et malaxer à petite vitesse (140 tours/min) pendant 1 minute ;
- A T = 6 minutes : ajouter l'eau de gâchage (+ adjuvants éventuels) en 30 secondes (tout en malaxant à petite vitesse (140 tours/min) ;
- A T = 6 minutes et 30 secondes : malaxer à grande vitesse (280 tours/min) pendant 1 minute ;
- A T = 7 minutes et 30 secondes : arrêter le malaxage.

### Méthode de préparation d'un béton selon la formulation (2), (3) ou (4)

- Mettre les sables et les gravillons dans le bol d'un malaxeur Zyklos (capacité 30 ou 50 L), Sipe (capacité 230 L) ou Pemat (capacité 500 L) ;
- A T = 0 : débuter le malaxage et ajouter simultanément l'eau de mouillage en 30 secondes, puis continuer à malaxer jusqu'à 60 secondes ;
- A T = 60 secondes : arrêter le malaxage et laisser reposer pendant 4 minutes ;
- A T = 5 minutes (T0 pour le test de maintien de rhéologie) : ajouter le ciment Portland et l'agent modificateur de rhéologie et malaxer pendant 1 minute ;
- A T = 6 minutes : ajouter l'eau de gâchage (+ adjuvants éventuels) en 30 secondes tout en malaxant ;
- A T = 6 minutes et 30 secondes : malaxer pendant 1 minute 30 secondes ;
- A T = 8 minutes : arrêter le malaxage.

### Méthode de mesure de l'étalement d'une composition hydraulique

Le principe de la mesure d'étalement a consisté à remplir un tronc de cône de mesure d'étalement avec la composition hydraulique à tester puis à libérer ladite composition du tronc de cône de mesure d'étalement afin de déterminer le diamètre du disque obtenu quand la composition hydraulique a fini de s'étaler. Le tronc de cône de mesure d'étalement correspondait à une reproduction à l'échelle ½ du tronc cône tel que défini par la norme NF P 18-451, 1981. Le tronc de cône de mesure d'étalement avait les dimensions suivantes :
- diamètre du cercle de la base supérieure : 50 +/- 0,5 mm ;
- diamètre du cercle de la base inférieure : 100 +/- 0,5 mm ; et
- hauteur : 150 +/-0,5 mm.

L'ensemble de l'opération a été réalisée à 20 °C. La mesure de l'étalement a été réalisée de la façon suivante :
- Remplir le tronc de cône de référence en une seule étape avec la composition hydraulique à tester ;
- Répartir la composition hydraulique de manière homogène dans le tronc de cône ;
- Araser la surface supérieure du cône ;
- Soulever le tronc de cône verticalement ; et
- Mesurer l'étalement selon quatre diamètres à 45° avec un pied à coulisse. Le résultat de la mesure d'étalement était la moyenne des quatre valeurs à +/- 1 mm.

### Méthode de mesure de l'affaissement d'une composition hydraulique

L'affaissement a été mesuré comme cela est décrit dans la norme EN 12350-2 « Essai pour béton frais - Partie 2 : Essai d'affaissement ».

### Méthode de mesure de la résistance de compression

La résistance à la compression a été mesurée pour les mortiers comme cela est décrit dans la norme EN 196-1 « Méthode d'essais des ciments » et pour les bétons comme cela est décrit dans la norme EN 12390-2 « Essai pour béton durci - Partie 2 : Confection et conservation des éprouvettes pour essais de résistance » et PR EN 12390-3:1999 « Essai pour béton durci - Partie 3 : Résistance à la compression des éprouvettes » avec des éprouvettes cylindriques ayant un diamètre de 11 cm et un hauteur de 22 cm.

### Méthode de mesure du temps de prise d'une composition hydraulique

Un enregistreur de température a été utilisé, par exemple un enregistreur de température commercialisé par la société Testo. La composition hydraulique a été placée dans une enceinte adiabatique. L'enregistreur a été disposé dans la composition hydraulique. Une acquisition de la température a été réalisée toutes les minutes. La température de la composition hydraulique tendait à diminuer après la fabrication de la composition hydraulique pour se stabiliser à un palier de température constant jusqu'à la prise pendant laquelle la température a augmenté temporairement. Pour des mesures réalisées à plus de 15°C, le début de la prise correspondait, sauf indication contraire, à la durée mesurée à partir de 24 heures après la fabrication de la composition hydraulique jusqu'à l'instant où la température a augmenté de deux degrés par rapport au palier de température pour une composition hydraulique.

### EXEMPLE 1

Cinq mortiers M0, M1, M2, M3 et M4 ont été préparés selon la formulation (1) à 20°C. Un litre de chaque mortier M0, M1, M2, M3 et M4 a été réalisé.

Pour les mortiers M0, M1, M2 et M3 et M4, l'agent retardateur était le CHRYSOPlast CER™. Chaque mortier M0, M1 et M2 comprenait 0,35 % en masse d'extrait sec de l'agent retardateur par rapport à la masse de ciment.

Pour les mortiers M0, M1, M2, M3 et M4, l'agent modificateur de rhéologie était le Culminal MHPC 20000 P™. Chaque mortier M0, M1, M2, M3 et M4 comprenait 0,11 % en masse d'extrait sec de l'agent modificateur de rhéologie par rapport à la masse de ciment.

Le mortier M0 était un mortier de référence qui ne comprenait pas de superplastifiant.

Le superplastifiant pour le mortier M1 était le Rheotec Z60™. Le mortier M1 comprenait 0,4 % en masse d'extrait sec de Rheotec Z60™ par rapport à la masse de ciment.

Le superplastifiant pour le mortier M2 était le GLENIUM 27™. Le mortier M2 comprenait 0,4 % en masse d'extrait sec de GLENIUM 27™ par rapport à la masse de ciment.

Le superplastifiant pour le mortier M3 était le PRELOM 300™. Le mortier M3 comprenait 0,55 % en masse d'extrait sec de PRELOM 300™ par rapport à la masse de ciment.

Le superplastifiant pour le mortier M4 était un mélange de GLENIUM 27™ et de Rheotec Z60™. Le mortier M4 comprenait 0,15% en masse d'extrait sec de GLENIUM 27™ par rapport à la masse de ciment et 0,15 % en masse d'extrait sec de Rheotec Z60™ par rapport à la masse de ciment.

Les mortiers M0, M1 et M2 ont été conservés au repos, sans agitation. Trois échantillons ont été conservés pour chaque mortier. Des mesures d'étalement ont été réalisées, à 20°C, à 5 minutes pour le premier échantillon, à 24 heures pour le deuxième échantillon et à 48 heures pour le troisième échantillon. Chaque échantillon a été mélangé peu avant la mesure. Les résultats de ces essais sont rassemblés dans le tableau 5 suivant :

**Tableau 5**

| Mortier | Superplastifiant (% en masse extrait sec / masse ciment) | Etalement à 5 min (mm) | Etalement à 24 h (mm) | Etalement à 48 h (mm) |
|---|---|---|---|---|
| M0 | - | 150 | 105 | 100 |
| M1 | Rheotec Z60™ -0,4% | 160 | 205 | 155 |
| M2 | GLENIUM 27™ - 0,4 % | 190 | 170 | 170 |
| M3 | PRELOM 300™ - 0,55 % | 180 | 170 | 160 |
| M4 | GLENIUM 27™ - 0,15 % | 170 | 165 | 150 |
| | Rheotec Z60™ - 0,15 % | | | |

La diminution de l'étalement sur 48 heures était d'environ 50 mm pour le mortier M0, ce qui correspondait à une diminution d'étalement sur 48 heures mesuré avec un cône selon la norme EN 12350-2 supérieure à 100 mm. Le mortier M0 n'était donc pas satisfaisant.

La diminution de l'étalement sur 48 heures était inférieure à 20 mm pour les mortiers M1, M2, M3 et M4, ce qui correspondait à une diminution d'étalement sur 48 heures mesuré avec un cône selon la norme EN 12350-2 inférieure à 100 mm. Les mortiers M1, M2, M3 et M4 étaient donc satisfaisants. En outre, aucun ressuage ni aucune sédimentation des mortiers M1, M2, M3 et M4 n'a été observé.

### EXEMPLE 2

Deux bétons B1 et B2 ont été préparés selon la formulation (2) à 20°C. Pour chaque béton B1 et B2, environ 20 litres de béton ont été réalisés.

L'agent retardateur pour les bétons B1 et B2 était le CHRYSOPlast CER™. Chaque béton B1 et B2 comprenait 0,35 % en masse d'extrait sec de l'agent retardateur par rapport à la masse de ciment.

L'agent modificateur de rhéologie pour les bétons B1 et B2 était le Culminal MHPC 20000 P™. Chaque béton B1 et B2 comprenait 0,11 % en masse d'extrait sec de l'agent modificateur de rhéologie par rapport à la masse de ciment.

Le superplastifiant pour le béton B1 était le GLENIUM 27™. Le béton B1 comprenait 0,4 % en masse d'extrait sec de GLENIUM 27™ par rapport à la masse de ciment.

Le superplastifiant pour le béton B2 était le Rheotec Z60™. Le béton B2 comprenait 0,4 % en masse d'extrait sec de Rheotec Z60™ par rapport à la masse de ciment.

Chaque béton B1 et B2 a été placé dans un seau de 25 litres. Les seaux ont été fermés hermétiquement par un couvercle, puis fixés à une palette qui a été transportée par un charriot élévateur pendant 10 minutes, sans agitation, à une vitesse moyenne d'une douzaine de kilomètre par heure. Le charriot élévateur ne comprenait par d'amortisseurs. Les bétons B1 et B2 ont ensuite été conservés au repos, sans agitation.

Quatre échantillons ont été conservés pour chaque béton. Des mesures d'affaissement ont été réalisées, à 20°C, à 5 minutes pour le premier échantillon, à 24 heures pour le deuxième échantillon, à 48 heures pour le troisième échantillon et à 72 heures pour le quatrième échantillon. Chaque échantillon a été mélangé peu avant la mesure. Les résultats de ces essais sont rassemblés dans le tableau 6 suivant :

**Tableau 6**

| Béton | Superplastifiant (% en masse d'extrait sec / masse ciment) | Affaissement (mm) | | | |
|---|---|---|---|---|---|
| | | 5 min | 24 h | 48 h | 72 h |
| B1 | GLENIUM 27™ (0,40 %) | 240 | 230 | 220 | 170 |
| B2 | Rheotec Z60™ (0,40 %) | 220 | 255 | 250 | 220 |

La variation de l'affaissement sur 48 heures était inférieure à 50 mm pour les bétons B1 et B2. Les bétons B1 et B2 étaient donc satisfaisants. De plus, La variation de l'affaissement sur 72 heures était inférieure à 50 mm pour le béton B2. En outre, aucun ressuage ni aucune sédimentation n'a été sensiblement observé pour les bétons B1 et B2, et ce en dépit d'un transport sans agitation.

Le temps de prise était d'environ 88 heures pour les bétons B1 et B2. La durée entre la fin de la fenêtre d'ouvrabilité et le début de la prise des bétons B1 et B2 était donc inférieure à 16 heures.

### EXEMPLE 3

Un béton B3 a été préparé selon la formulation (2) à 20°C. Trois gâchées d'environ 500 litres chacune ont été préparées.

L'agent retardateur était le CHRYSOPlast CER™. Le béton B3 comprenait 0,35 % en masse d'extrait sec de l'agent retardateur par rapport à la masse de ciment.

L'agent modificateur de rhéologie était le Culminal MHPC 20000 P™. Le béton B3 comprenait 0,13% en masse d'extrait sec de l'agent modificateur de rhéologie par rapport à la masse de ciment.

Le superplastifiant était le GLENIUM 27™. Le béton B3 comprenait 0,40 % en masse d'extrait sec de GLENIUM 27™ par rapport à la masse de ciment.

Les gâchées ont été réalisées dans un malaxeur de type Pemat. Les trois gâchées ont été homogénéisées par 70 tours dans un camion toupie Fiori de 2 m³. Trois sac imperméables P1, P2 et P3 à double enveloppe ont été remplis chacun d'environ 400 litres du béton B3.

Les sacs ont été transportés par camion, sans agitation, pendant 75 minutes, dont 15 minutes à une vitesse moyenne de 110 km/h et 60 minutes à une vitesse moyenne de 80 km/h.

Les sacs ont ensuite été maintenus au repos.

L'affaissement a été mesuré à 4 heures pour le béton B3 du sac P1. L'affaissement a été mesuré à 24 heures pour le béton B3 du sac P2, et l'affaissement a été mesuré à 48 heures pour le béton B3 du sac P3,. Le béton a été mélangé peu avant la mesure. Les résultats de ces essais sont rassemblés dans le tableau 7 suivant :

**Tableau 7**

| Sac de béton | Affaissement (mm) | Instant de mesure |
|---|---|---|
| P1 | 190 | 4 h |
| P2 | 185 | 24 h |
| P3 | 170 | 48 h |

Le béton B3 a été maintenu dans la même classe de consistance (classe S4) pendant 48 heures. Aucun ressuage, ni aucun tassement des granulats n'a été observé dans chaque sac. Les sacs P1, P2 et P3 ont pu être vidés sans difficulté dans le camion toupie. Le béton B3 s'écoulait de lui-même sans devoir le vibrer. En outre, les sacs P1, P2 et P3 ont été vidés intégralement sans qu'il reste d'amas de pâte ou de granulats sur les parois.

### EXEMPLE 4

Un béton B4 a été préparé selon la formulation (3) à 20°C. Une gâchée d'environ 500 litres a été préparée.

L'agent retardateur était le CHRYSOPlast CER™. Le béton B4 comprenait 0,3 % en masse d'extrait sec de l'agent retardateur par rapport à la masse de ciment.

L'agent modificateur de rhéologie était le Culminal MHPC 20000 P™. Le béton B4 comprenait 0,13% en masse d'extrait sec de l'agent modificateur de rhéologie par rapport à la masse de ciment.

Le superplastifiant était le GLENIUM 27™. Le béton B4 comprenait 0,3 % en masse d'extrait sec de GLENIUM 27™ par rapport à la masse de ciment.

Le béton a été mélangé dans un malaxeur de type Pemat et a été homogénéisée par 70 tours dans un camion toupie Fiori de 2 m³. Un sac à double enveloppe a été rempli d'environ 400 litres du béton B4.

Le sac a été transporté par camion, sans agitation. Le sac a ensuite été maintenu au repos.

Deux échantillons ont été conservés. Des mesures d'affaissement ont été réalisées, à 20°C, à 5 minutes pour le premier échantillon et à 48 heures pour le second échantillon. Chaque échantillon a été mélangé peu avant la mesure. Les résultats de ces essais sont rassemblés dans le tableau 8 suivant :

**Tableau 8**

| Béton | Affaissement à 5 min (mm) | Affaissement à 48 h (mm) |
|---|---|---|
| B4 | 220 | 170 |

La variation de l'affaissement du béton B4 était inférieure à 50 mm sur 48 heures. Aucun ressuage ni aucun tassement du squelette granulaire après stockage n'a été observé.

### EXEMPLE 5

Deux bétons B5 et B6 ont été préparés selon la formulation (4) à 20°C. Pour chaque béton B5 et B6, environ 20 litres de béton ont été réalisés.

L'agent retardateur pour les bétons B5 et B6 était le CHRYSOPlast CER™.

Chaque béton B5 et B6 comprenait 0,3 % en masse, exprimée en extrait sec, de l'agent retardateur par rapport à la masse de ciment.

Le superplastifiant pour les bétons B5 et B6 était le GLENIUM 27™. Chaque béton B5 et B6 comprenait 0,3 % en masse, exprimée extrait sec, de l'agent modificateur de rhéologie par rapport à la masse de ciment.

L'agent modificateur de rhéologie pour le béton B5 était le Culminal MHPC 20000 P™. Le béton B5 comprenait 0,13 % en masse, exprimée extrait sec, de l'agent modificateur de rhéologie par rapport à la masse de ciment.

L'agent modificateur de rhéologie pour le béton B6 était le Tylose MHS 300000P6. Le béton B6 comprenait 0,13% en masse, exprimée extrait sec, de l'agent modificateur de rhéologie par rapport à la masse de ciment.

Chaque béton B1 et B2 a été placé dans un seau de 25 litres. Les seaux ont été fermés hermétiquement par un couvercle, puis fixés à une palette qui a été transportée par un charriot élévateur pendant 10 minutes, sans agitation, à une vitesse moyenne d'une douzaine de kilomètre par heure. Le charriot élévateur ne comprenait par d'amortisseurs. Les bétons B1 et B2 ont ensuite été conservés au repos, sans agitation.

Quatre échantillons ont été conservés pour chaque béton. Des mesures d'affaissement ont été réalisées, à 20°C, à 5 minutes pour le premier échantillon, à 24 heures pour le deuxième échantillon, à 48 heures pour le troisième échantillon et à 72 heures pour le quatrième échantillon. Chaque échantillon a été mélangé peu avant la mesure. Les résultats de ces essais sont rassemblés dans le tableau 9 suivant :

**Tableau 9**

| Béton | Agent modificateur de rhéologie (% en masse d'extrait sec / masse ciment) | Affaissement (mm) | | |
|---|---|---|---|---|
| | | 5 min | 24 h | 48 h |
| B5 | Culminal MHPC 20000 P™ (0,13 %) | 235 | 225 | 215 |
| B6 | Tylose MHS 300000P6 (0,04 %) | 240 | 230 | 220 |

La variation de l'affaissement sur 48 heures était inférieure à 50 mm pour les bétons B5 et B6. Les bétons B5 et B6 étaient donc satisfaisants. En outre, aucun ressuage ni aucune sédimentation n'a été sensiblement observé pour les bétons B5 et B6, et ce en dépit d'un transport sans agitation.

### EXEMPLE 6

Un mortiers M5 a été préparé selon la formulation (1) à 20°C. Le ciment était du ciment produit par la société Lafarge provenant du site du Havre du type CEM I 52,5 N selon la norme EN 197-1.

Un mortier M6 a été préparé selon la formulation (1) à 20°C à la différence que le ciment de la formulation (1) a été remplacée par 85 % en masse du ciment produit par la société Lafarge provenant du site du Havre du type CEM I 52,5 N selon la norme EN 197-1 et 15 % en masse du matériau de remplissage calcaire de Saint Pierre La Cour.

Un mortier M7 a été préparé selon la formulation (1) à 20°C à la différence que le ciment de la formulation (1) a été remplacée par 85 % en masse du ciment produit par la société Lafarge provenant du site du Havre du type CEM I 52,5 N selon la norme EN 197-1 et 15 % en masse de cendres volantes provenant du site Carling.

Un mortier M8 a été préparé selon la formulation (1) à 20°C à la différence que le ciment de la formulation (1) a été remplacée par 85 % en masse du ciment produit par la société Lafarge provenant du site de Saint Pierre la Cour du type CEM Il 32,5 N selon la norme EN 197-1 et 15 % en masse du matériau de remplissage calcaire de Saint Pierre La Cour.

Un mortier M9 a été préparé selon la formulation (1) à 20°C à la différence que le ciment de la formulation (1) a été remplacée par 82 % en masse du ciment produit par la société Lafarge provenant du site de Saint Pierre la Cour du type CEM Il 42,5 N selon la norme EN 197-1 et 18 % en masse du matériau de remplissage calcaire de Saint Pierre La Cour.

Un litre de chaque mortier M5, M6, M7, M8 et M9 a été réalisé.

Pour les mortiers M5, M6, M7, M8 et M9, l'agent retardateur était le CHRYSOPlast CER™. Chaque mortier M5, M6 et M7 comprenait 0,33 % en masse, exprimée en extrait sec, de l'agent retardateur par rapport à la masse de liant (ciment + matériau de substitution). Chaque mortier M8 et M9 comprenait 0,38 % en masse, exprimée en extrait sec, de l'agent retardateur par rapport à la masse de liant (ciment + matériau de substitution).

Pour les mortiers M5, M6, M7, M8 et M9, l'agent modificateur de rhéologie était le Culminal MHPC 20000 P™. Chaque mortier M5, M6, M7, M8 et M9 comprenait 0,11 % en masse, exprimée en extrait sec, de l'agent modificateur de rhéologie par rapport à la masse de liant (ciment + matériau de substitution).

Pour les mortiers M5, M6, M7, M8 et M9, le superplastifiant était le GLENIUM 27™. Chaque mortier M5, M6 et M7 comprenait 0,3% en masse, exprimée en extrait sec, du superplastifiant par rapport à la masse de liant (ciment + matériau de substitution). Le mortier M8 comprenait 0,35 % en masse, exprimée en extrait sec, du superplastifiant par rapport à la masse de liant (ciment + matériau de substitution). Le mortier M9 comprenait 0,5 % en masse, exprimée en extrait sec, du superplastifiant par rapport à la masse de liant (ciment + matériau de substitution).

Les mortiers M5, M6, M7, M8 et M9 ont été conservés au repos, sans agitation. Trois échantillons ont été conservés pour chaque mortier. Des mesures d'étalement ont été réalisées, à 20°C, à 5 minutes pour le premier échantillon, à 24 heures pour le deuxième échantillon et à 48 heures pour le troisième échantillon. Chaque échantillon a été mélangé peu avant la mesure. Les résultats de ces essais sont rassemblés dans le tableau 10 suivant :

**Tableau 10**

| Mortier | Ciment | Addition | Etalement à 5 min (mm) | Etalement à 24 h (mm) | Etalement à 48 h (mm) |
|---|---|---|---|---|---|
| M5 | CEM I (100 %) | 0% | 165 | 165 | 150 |
| M6 | CEM I (85 %) | Filler calcaire (15 %) | 165 | 150 | 150 |
| M7 | CEM I (85 %) | Cendres volantes (15 %) | 130 | 120 | 120 |
| M8 | CEM II 32,5 (74 %) | Filler calcaire (26 %) | 155 | 135 | 135 |
| M9 | CEM II 42,5 (82 %) | Cendres volantes (18 %) | 155 | 155 | 135 |

La diminution de l'étalement sur 48 heures était inférieure à 20 mm pour les mortiers M5, M6, M7, M8 et M9, ce qui correspondait à une diminution d'étalement sur 48 heures mesuré avec un cône selon la norme EN 12350-2 inférieure à 100 mm. Les mortiers M5, M6, M7, M8 et M9 étaient donc satisfaisants. En outre, aucun ressuage ni aucune sédimentation des mortiers M5, M6, M7, M8 et M9 n'a été observé.

## Revendications

1. Composition hydraulique comprenant :
- de 220 à 500 kg, par mètre cube de la composition hydraulique à l'état frais, d'un liant hydraulique comprenant du ciment Portland ;
- de 400 à 1800 kg, par mètre cube de la composition hydraulique à l'état frais, d'un sable ayant un D10 supérieur à 0,1 mm et un D90 inférieur à 4 mm ;
- de 0,1 à 5 % en masse d'extrait sec par rapport à la masse du liant hydraulique d'un agent retardateur comprenant un acide carboxylique, un acide phosphonique ou leurs sels ;
- de 0,05 à 5 % en masse d'extrait sec par rapport à la masse du liant hydraulique d'un superplastifiant comprenant un polymère polyphosphate de polyoxyde d'alkylène, un polymère polyphosphonate de polyoxyde d'alkylène, un polymère polysulfonate de polyoxyde d'alkylène ou un polymère polycarboxylate de polyoxyde d'alkylène ; et
- de 0,01 à 2 % en masse d'extrait sec par rapport à la masse du liant hydraulique d'un agent modificateur de rhéologie comprenant une cellulose ou un dérivé de cellulose, d'où il résulte que le temps de prise de la composition hydraulique est supérieur ou égal à 12 heures en l'absence de déclenchement de la prise de la composition hydraulique et la variation de l'affaissement de la composition hydraulique mesuré selon la norme EN 12350-2 étant inférieure à 50 mm ou la variation de l'étalement de la composition hydraulique mesuré avec un cône selon la norme EN 12350-2 est inférieure à 100 mm pendant au moins 12 heures en l'absence de déclenchement de la prise de la composition hydraulique.

2. Composition hydraulique selon la revendication 1, dans laquelle l'agent retardateur comprend un acide hydroxycarboxylique ou un sel d'acide hydroxycarboxylique.

3. Composition hydraulique selon la revendication 2, dans laquelle l'agent retardateur comprend un gluconate.

4. Composition hydraulique selon l'une quelconque des revendications 1 à 3, dans laquelle la quantité de l'agent retardateur est comprise de 0,1 à 1 % en masse d'extrait sec par rapport à la masse du liant hydraulique.

5. Composition hydraulique selon l'une quelconque des revendications 1 à 4, dans laquelle la quantité du superplastifiant est comprise de 0,05 à 1 % en masse d'extrait sec par rapport à la masse du liant hydraulique.

6. Composition hydraulique selon la revendication 5, dans laquelle la quantité du superplastifiant est comprise de 0,05 à 0,5 % en masse d'extrait sec par rapport à la masse du liant hydraulique.

7. Composition hydraulique selon l'une quelconque des revendications 1 à 6, dans laquelle la quantité de l'agent modificateur de rhéologie est comprise de 0,025 à 0,4 % en masse d'extrait sec par rapport à la masse du liant hydraulique.

8. Composition hydraulique selon l'une quelconque des revendications 1 à 7, dans laquelle le superplastifiant comprend un polycarboxylate de polyoxyde d'alkylène.

9. Composition hydraulique selon l'une quelconque des revendications 1 à 8, dans laquelle la résistance à la compression de la composition hydraulique est au moins égale à 1 MPa 24 heures après le début de la prise de la composition hydraulique.

10. Composition hydraulique selon l'une quelconque des revendications 1 à 9, dans laquelle la durée entre la fin de la fenêtre d'ouvrabilité de la composition hydraulique et le début de la prise de la composition hydraulique est inférieure à 36 heures.

11. Composition hydraulique selon la revendication 10, dans laquelle la durée entre la fin de la fenêtre d'ouvrabilité de la composition hydraulique et le début de la prise de la composition hydraulique est inférieure à 24 heures.

## Patentansprüche

1. Hydraulische Zusammensetzung, umfassend:
- 220 bis 500 kg, pro Kubikmeter der hydraulischen Zusammensetzung in nicht abgebundenem Zustand, eines hydraulischen Bindemittels, umfassend Portlandzement;
- 400 bis 1.800 kg, pro Kubikmeter der hydraulischen Zusammensetzung in nicht abgebundenem Zustand, eines Sands mit einer D10 größer als 0,1 mm und einer D90 kleiner als 4 mm;
- 0,1 bis 5 Masse-% Trockenextrakt, bezogen auf die Masse des hydraulischen Bindemittels, eines Abbindeverzögerers, umfassend eine Carbonsäure, eine Phosphonsäure oder Salze davon;
- 0,05 bis 5 Masse-% Trockenextrakt, bezogen auf die Masse des hydraulischen Bindemittels, eines Hochleistungsfließmittels, umfassend ein Polyalkylenoxid-Polyphosphat-Polymer, ein Polyalkylenoxid-Polyphosphonat-Polymer, ein Polyalkylenoxid-Polysulfonat-Polymer oder ein Polyalkylenoxid-Polycarboxylat-Polymer; und
- 0,01 bis 2 Masse-% Trockenextrakt, bezogen auf die Masse des hydraulischen Bindemittels, eines Rheologiemodifizierers, umfassend eine Cellulose oder ein Cellulosederivat, woraus sich ergibt, dass die Abbindezeit der hydraulischen Zusammensetzung, bei Abwesenheit von Abbindeauslösung der hydraulischen Zusammensetzung, größer oder gleich 12 Stunden ist, und dass das Setzmaß der hydraulischen Zusammensetzung bei der Messung gemäß der Norm EN 12350-2 kleiner als 50 mm ist, oder dass die Variation des Ausbreitmaßes der hydraulischen Zusammensetzung, gemessen mit einem Kegel gemäß der Norm EN 12350-2, kleiner als 100 mm ist, im Verlauf von mindestens 12 Stunden bei Abwesenheit von Abbindeauslösung der hydraulischen Zusammensetzung.

2. Hydraulische Zusammensetzung nach Anspruch 1, wobei der Abbindeverzögerer eine Hydroxycarbonsäure oder ein Hydroxycarbonsäuresalz umfasst.

3. Hydraulische Zusammensetzung nach Anspruch 2, wobei der Abbindeverzögerer ein Gluconat umfasst.

4. Hydraulische Zusammensetzung nach einem der Ansprüche 1 bis 3, wobei die Menge des Abbindeverzögerers im Bereich zwischen 0,1 bis 1 Masse-% Trockenextrakt, bezogen auf die Masse des hydraulischen Bindemittels, liegt.

5. Hydraulische Zusammensetzung nach einem der Ansprüche 1 bis 4, wobei die Menge des Hochleistungsfließmittels im Bereich zwischen 0,05 bis 1 Masse-% Trockenextrakt, bezogen auf die Masse des hydraulischen Bindemittels, liegt.

6. Hydraulische Zusammensetzung nach Anspruch 5, wobei die Menge des Hochleistungsfließmittels im Bereich zwischen 0,05 bis 0,5 Masse-% Trockenextrakt, bezogen auf die Masse des hydraulischen Bindemittels, liegt.

7. Hydraulische Zusammensetzung nach einem der Ansprüche 1 bis 6, wobei die Menge des Rheologiemodifizierers im Bereich zwischen 0,025 bis 0,4 Masse-% Trockenextrakt, bezogen auf die Masse des hydraulischen Bindemittels, liegt.

8. Hydraulische Zusammensetzung nach einem der Ansprüche 1 bis 7, wobei das Hochleistungsfließmittel ein Polyalkylenoxid-Polycarboxylat umfasst.

9. Hydraulische Zusammensetzung nach einem der Ansprüche 1 bis 8, wobei die Druckfestigkeit der hydraulischen Zusammensetzung, 24 Stunden nach dem Abbindebeginn der hydraulischen Zusammensetzung, mindestens gleich 1 MPa beträgt.

10. Hydraulische Zusammensetzung nach einem der Ansprüche 1 bis 9, wobei die Dauer zwischen dem Ende des Verarbeitungszeitfensters der hydraulischen Zusammensetzung und dem Abbindebeginn der hydraulischen Zusammensetzung weniger als 36 Stunden beträgt.

11. Hydraulische Zusammensetzung nach Anspruch 10, wobei die Dauer zwischen dem Ende des Verarbeitungszeitfensters der hydraulischen Zusammensetzung und dem Abbindebeginn der hydraulischen Zusammensetzung weniger als 24 Stunden beträgt.

## Claims

1. Hydraulic composition comprising:
- from 220 to 500 kg, per cubic metre of the hydraulic composition in the fresh state, of a hydraulic binder comprising Portland cement;
- from 400 to 1800 kg, per cubic metre of the hydraulic composition in the fresh state, of a sand having a D10 which is greater than 0.1 mm and a D90 which is less than 4 mm;
- from 0.1 to 5 % by weight of dry extract, relative to the weight of the hydraulic binder, of a retardant comprising a carboxylic acid, a phosphonic acid or the salts thereof;
- from 0.05 to 5 % by weight of dry extract, relative to the weight of the hydraulic binder, of a superplasticiser comprising an alkylene polyoxide polyphosphate polymer, an alkylene polyoxide polyphosphonate polymer, an alkylene polyoxide polysulphonate polymer or an alkylene polyoxide polycarboxylate polymer; and
- from 0.01 to 2 % by weight of dry extract, relative to the weight of the hydraulic binder, of a rheology modifier comprising a cellulose or a cellulose derivative, with the result that the setting time for the hydraulic composition is greater than or equal to 12 hours in the absence of any initiation of the setting of the hydraulic composition and where the variation in the slump of the hydraulic composition measured according to the EN standard 12350-2 is less than 50 mm, or the variation in spread of the hydraulic composition measured with a cone according to EN standard 12350-2 is less than 100 mm for at least 12 hours in the absence of any initiation of the setting of the hydraulic composition.

2. Hydraulic composition according to claim 1, wherein the retardant comprises a hydroxycarboxylic acid or a hydroxycarboxylic acid salt.

3. Hydraulic composition according to claim 2, wherein the retardant comprises a gluconate.

4. Hydraulic composition according to any of claims 1 to 3, wherein the amount of retardant is from 0.1 to 1 % by weight of dry extract, relative to the weight of the hydraulic binder.

5. Hydraulic composition according to any of claims 1 to 4, wherein the amount of superplasticiser is from 0.05 to 1 % by weight of dry extract, relative to the weight of the hydraulic binder.

6. Hydraulic composition according to claim 5, wherein the amount of superplasticiser is from 0.05 to 0.5 % by weight of dry extract, relative to the weight of the hydraulic binder.

7. Hydraulic composition according to any of claims 1 to 6, wherein the amount of rheology modifier is from 0.025 to 0.4 % by weight of dry extract, relative to the weight of the hydraulic binder.

8. Hydraulic composition according to any of claims 1 to 7, wherein the superplasticiser comprises an alkylene polyoxide polycarboxylate.

9. Hydraulic composition according to any of claims 1 to 8, wherein the compression resistance of the hydraulic composition is equal to at least 1 MPa, 24 hours after the hydraulic composition starts to set.

10. Hydraulic composition according to any of claims 1 to 9, wherein the length of time between the end of the workability window of the hydraulic composition and the start of the setting of the hydraulic composition is less than 36 hours.

11. Hydraulic composition according to claim 10, wherein the length of time between the end of the workability window of the hydraulic composition and the start of the setting of the hydraulic composition is less than 24 hours.
